# EUROPÄISCHE PATENTSCHRIFT

(11) **EP 1 846 182 B1**
(45) Veröffentlichungstag und Bekanntmachung des Hinweises auf die Patenterteilung: **01.08.2012**
(21) Anmeldenummer: 06708143.0
(22) Anmeldetag: 09.02.2006
(51) Int. Cl.: B23C 5/22, B23B 27/16, B23C 5/00

(54) **Wendeschneidplatte und Schneidplattenhalter**
Indexable cutting insert and cutting insert holder
Plaquette de coupe indexable et support pour la plaquette de coupe

(30) Priorität: 11.02.2005 DE 102005006589
(43) Veröffentlichungstag der Anmeldung: 24.10.2007
(73) Patentinhaber: Sandvik Intellectual Property AB, 811 81 Sandviken (SE)
(72) Erfinder: WERMEISTER, Günther, 40667 Meerbusch (DE)
(74) Vertreter: WSL Patentanwälte Partnerschaftsgesellschaft
(86) Internationale Anmeldenummer: PCT/EP2006/050799
(87) Internationale Veröffentlichungsnummer: WO 2006/084875

(56) Entgegenhaltungen:
- EP-A- 1 087 853
- EP-A1- 1 598 132
- DE-A1- 3 800 126
- DE-A1- 4 033 072
- FR-A- 1 403 805
- US-A- 3 629 919
- US-A- 3 701 187
- US-A- 4 140 431
- US-A- 5 685 670
- US-A1- 2002 189 414
- US-A1- 2003 103 818
- US-A1- 2003 113 176

## Beschreibung

Die vorliegende Erfindung betrifft eine doppelseitige Wendeschneidplatte gemäß dem Oberbegriff des Anspruchs 1 mit einer unteren und einer oberen Fläche und mit umlaufenden Seitenflächen, welche die untere und die obere Fläche miteinander verbinden und welche zu einer gemeinsamen Geraden parallel verlaufen, die wiederum im wesentlichen senkrecht zu den unteren und oberen Flächen verläuft, so daß sich für die Wendeschneidplatte im wesentlichen die Form eines Prismas ergibt, wobei entlang eines Teils der Schnittlinien der umlaufenden Flächen mit den unteren und oberen Flächen Schneidkanten ausgebildet sind, während an einem anderen Teil der Schnittlinien von Seitenflächen mit den unteren bzw. oberen Flächen keine Schneidkanten ausgebildet sind, wobei in der Draufsicht auf die obere oder untere Fläche mindestens ein Teil der umlaufenden Seitenflächen jeweils mindestens je eine konkave Einbuchtung aufweist, die für die Aufnahme eines Abstützelementes ausgelegt ist. Ein entsprechender Schneideinsatz ist beispielsweise aus der europäischen Patentanmeldung Nr. EP 1 087 853 A1 bekannt. Die Begriffe "Wendeschneidplatte" und "Schneideinsatz" werden in der vorliegenden Anmeldung synonym verwendet, wobei damit Schneideinsätze gemeint sind, die mindestens zwei Schneidkanten aufweisen, welche durch Drehen oder Wenden des Schneideinsatzes getrennt voneinander bzw. nacheinander in eine Eingriffsposition mit einem Werkstück gebracht werden können. Des weiteren betrifft die vorliegende Erfindung auch einen Wendeschneidplattenhalter gemäß dem Oberbegriff des Anspruchs 15 zur Halterung von Wendeschneidplatten sowie die Kombination aus Wendeschneidplatte und Wendeplattenhalter.

Auch ein solcher Wendeplattenhalter ist im Prinzip aus der EP-A-1 087 853 bekannt. Eine weitere Wendeplatte, die allerdings eine nicht prismatische, pyramidenstumpfförmige Grundform hat, sowie ein Wendplattenhalter hierfür sind aus der US-A-5,685,670 bekannt.

Der aus der EP-A-1 087 853 bekannte Schneideinsatz hat die Grundform eines Prismas und weist an zwei jeweils entgegengesetzt liegenden Seiten am Übergang sowohl zu der oberen als auch zu der unteren Fläche je eine Schneidkante auf. Die Schneidkante verläuft in diesem Fall in der Draufsicht von oben entlang einer Zickzacklinie mit Trapezprofil, was daher rührt, daß die betreffende Seitenfläche einer Zahnreihe entsprechende vorspringende und rückspringende Bereiche hat. Auch gemäß der vorliegenden Erfindung haben in einer Ausführungsform die Schneidkanten ein entsprechendes, zahnförmiges Profil mit im Querschnitt trapezförmigen Zähnen. Dabei bildet die an die Schneidkante angrenzende Seitenfläche mit ihren vorspringenden Bereichen und den schräg nach innen verlaufenden Flanken bzw. Übergangsflächen zu den zurückspringenden Bereichen Freiflächen für Haupt- und Nebenschneidkanten, die an jedem der Zähne ausgebildet sind. Die Schneideinsätze weisen an ihrer oberen und unteren Fläche in unmittelbarer Nachbarschaft zu der Schneidkante rinnen- bzw. muldenartige Vertiefungen auf, die in der Spanformung und der Erzeugung einer positiven Spangeometrie an der Schneidkante dienen. Im übrigen sind die oberen und unteren Flächen eben ausgebildet.

Die umlaufenden Seitenflächen verlaufen senkrecht zu den oberen und unteren Flächen, was auch für die vor- und zurückspringenden Abschnitte der an die Schneidkante angrenzenden Seitenflächen gilt und ebenso für die Übergangsflächen bzw. Flanken dazwischen. Somit sind alle umlaufenden Seitenflächen parallel zu einer Geraden, nämlich einer Senkrechten auf die obere bzw. untere Fläche, die, abgesehen von den bereits erwähnten Spanmulden, als ebene Flächen ausgebildet sind.

Dies entspricht der Grundform eines Prismas.

Die vorliegende Erfindung ist jedoch nicht auf Ausführungsformen mit gezahnten Schneidkanten beschränkt, sondern ebenso auch anwendbar auf Schneideinsätze bzw. Wendeschneidplatten, die einfach gerade verlaufende Schneidkanten, gebrochene Schneidkanten oder auch mehr oder weniger konkav oder konvex gekrümmte Schneidkantenverläufe haben.

Der bekannte Schneideinsatz wird unter anderem eingesetzt zum Fräsen und Drehen von Nuten, insbesondere auch zum Drehen der Hubzapfen und Lagerzapfen von Kurbelwellen. Eine solche Bearbeitung der Kurbelwellen erfordert im allgemeinen auch die Bearbeitung der Kurbelwelle bis an die Wangen der Lager- oder Hubzapfen heran.

Es versteht sich, daß weder die Wendeschneidplatte noch ein entsprechender Schneidplattenhalter keinerlei über das Profil der äußersten Schneidkante bzw. Schneidecke hinausstehende Teile aufweisen darf, die mit den Wangen einer solchen Nut in Berührung kommen könnten.

Insbesondere dann, wenn beim Drehen derartiger Wellen oder auch sonst beim Herstellen von Nuten oder Absätzen mittels einer Drehbearbeitung ein größeres Aufmaß zu entfernen ist, kann man entweder in mehreren Durchgängen den Schneideinsatz an dem rotierenden Werkstück entlangbewegen und dabei jeweils relativ dünne Materialschichten abtragen, oder aber man kann mit dem Schneideinsatz bzw. der Wendeschneidplatte sofort tiefer in das Material einstechen und das Werkzeug relativ zum Werkstück dann in axialer Richtung (der Drehachse) bewegen, wobei eine entsprechend dickere Schicht des Materials abgetragen wird. Letzteres trägt selbstverständlich zur Steigerung der Produktivität bei. Allerdings hat eine solche Vorgehensweise auch den Nachteil, daß dabei relativ große Kräfte auf den Schneideinsatz bzw. die Wendeschneidplatte wirken. Da entsprechende Wendeschneidplatten im allgemeinen nur mit einer zentralen Befestigungsschraube an dem Plattenhalter befestigt sind, wirken entsprechend große Kräfte allein auf die zentrale Befestigungsschraube, was zu einer Überlastung der Schraube führen kann und was außerdem zu weniger genau und mit größeren Toleranzen hergestellten Bearbeitungsflächen führen kann.

Aus der US 3,701,187 ist ein Scheibenfräser mit Wendeschneidplatten und Wendeplattenhaltem bekannt. Die Wendeplattenhalter sind in drei verschiedenen Ausgestaltungen derart an einem Scheibenfräser angeordnet, dass eine Überlappung der Schneidkanten in Axialrichtung gewährleistet ist. Jeder dritte Wendeplattenhalter weist ein paar gegenüberliegenden Stützelemente auf. Allerdings haben weder die Schneideinsätze an ihren umlaufenden Seitenflächen konkave Einbuchtungen noch sind irgendwelche Abmessungen, insbesondere Dickemaße, für die Stützelemente beschrieben.

Gegenüber diesem Stand der Technik liegt der vorliegenden Erfindung die Aufgabe zugrunde, eine Wendeschneidplatte und auch einen entsprechenden Wendeschneidplattenhalter zu entwickeln, welche bei höherer Produktivität zu präziser und mit geringeren Toleranzen hergestellten Bearbeitungsflächen führen.

Hinsichtlich der Wendeschneidplatte wird diese Aufgabe durch die Merkmale des Anspruchs 1 gelöst, wobei sie in einer Draufsicht von oben oder unten eine rechteckige Grundform hat, wobei am Übergang zweier entgegengesetzt liegender Seitenflächen zu den oberen und unteren Flächen Schneidkanten ausgebildet sind, während die verbleibenden zwei entgegengesetzt liegenden Flächen die Einbuchtungen aufweisen. Dies ermöglicht es, ein Abstützelement eines entsprechenden Wendeplattenhalters in die Einbuchtung einzusetzen unter Anlage der in der Einbuchtung liegenden Abschnittes der Seitenfläche an eine entsprechend ausgestaltete Stützfläche. Aufgrund der entsprechend ausgestalteten Einbuchtung ist es weiterhin möglich, ein solches Stützelement vollständig in der Einbuchtung aufzunehmen, d.h. daß das Stützelement mit den übrigen Teilen der Seitenfläche bündig abschließen kann oder gegenüber diesem sogar noch etwas zurückgesetzt ist, d.h. innerhalb des durch die Einbuchtung gebildeten Profils liegt. In der bevorzugten Ausführungsform hat die Einbuchtung in einer Draufsicht auf die obere oder untere Fläche einen trapezförmigen Querschnitt. Es versteht sich, daß auch die diese Trapezform definierenden Seitenflächen der Einbuchtung Teil der umlaufenden Seitenfläche sind und parallel zu der erwähnten gemeinsamen Geraden verlaufen, so daß auch diese Flächen der Einbuchtung Teil der die Prismenform definierenden Umfangsflächen sind.

Auf diese Weise ist es möglich, die erfindungsgemäße Wendeschneidplatte gegen Seitenkräfte, die ansonsten nur von einer zentralen Befestigungsschraube oder einer entsprechenden Klemmpratze aufgefangen werden, auch direkt durch das Stützelement abzufangen, welches so in der entsprechenden Einbuchtung der Wendeschneidplatte liegt, daß es nicht über die Ebene hinausragt, die durch die außerhalb der Einbuchtung liegenden Bereiche der betreffenden Seitenfläche definiert wird.

Die Einbuchtung der Wendeschneidplatte definiert eine Stützfläche, die mit einem entsprechenden Stützelement eines Wendeplattenhalters in Kontakt gebracht werden kann und die mindestens 20% und maximal 80% der Breite (B) der Wendeschneidplatte beträgt und vorzugsweise zwischen 30 und 60% der Breite (B) liegt. Besonders bevorzugt sind Breitenmaße der Stützfläche zwischen 40% und 50 % der Breite der Wendeschneidplatte. Diese bevorzugten Maße gelten auch für etwaige gekrümmte, nicht ebene Stützflächen.

Zweckmäßigerweise hat der Schneideinsatz im wesentlichen eine Quaderform, wobei zwei auf entgegengesetzten Seiten des Schneideinsatzes angeordnete Seitenflächen sowohl am Übergang zu der oberen als auch am Übergang zu der unteren Fläche jeweils eine Schneidkante bilden. Die hierzu im wesentlichen (d. h. mit Ausnahme der durch die Einbuchtung gegebenen Struktur) senkrecht verlaufenden weiteren Seitenflächen definieren am Übergang zu den oberen und unteren Flächen keine Schneidkanten, abgesehen möglicherweise von kurzen Nebenschneidkanten, unmittelbar in Angrenzung die Schneidecken, d.h. am Übergang zu den die Schneidkanten definierenden Seitenflächen, und sie weisen stattdessen die erwähnten Einbuchtungen auf, in denen Stützelemente vorzugsweise beiderseits einer Wendeschneidplatte aufgenommen werden können, so daß die Wendeschneidplatte beidseitig gegen entsprechende Seitenkräfte abgestützt ist.

Selbstverständlich ist es auch möglich, auf einer Seitenfläche nicht nur eine, sondern mehrere nebeneinander angeordnete Einbuchtungen vorzusehen, in welchen ein entsprechendes Stützelement aufgenommen werden kann, wobei dann entsprechend mehrere Stützelemente vorgesehen sind oder aber ein Stützelement in verschiedenen relativen Positionen bezüglich der Wendeschneidplatte, d.h. in verschiedenen Einbuchtungen angeordnet werden kann, um die Schneidkante jeweils anders zu positionieren. Im Allgemeinen ist jedoch im Hinblick auf eine einfache Herstellung und eine maximale Stabilität eine Ausführungsform mit nur einer einzigen Einbuchtung in den entsprechenden, entgegengesetzt angeordneten Seitenflächen bevorzugt. Die Einbuchtungen sollten, gemessen von einer Tangentialebene an die außerhalb der Einbuchtung liegenden Seitenflächenabschnitte, eine Tiefe von mindestens 0,5 mm, vorzugsweise mindestens 0,8 mm, haben. Auf diese Weise können Vorsprünge mit einer entsprechenden "Dicke" von bis zu 0,5 bzw. 0,8 mm bündig bzw. ohne überzustehen in der Einbuchtung aufgenommen werden und sind dabei ausreichend stabil. Für bestimmte Anwendungen und insbesondere für kleinere Schneideinsätze kann dieses Maß allerdings auch verringert werden, wenn entsprechend dünnere Stützelemente noch immer eine ausreichende Stützkraft bieten. In der Praxis sind aber auch Einbuchtungen in einer Tiefe von 1- 2 mm, insbesondere ca. 1,5 mm, für Schneideinsätze normaler Größe, d. h. mit typischen Maximalabmessungen von ca. 15 bis 25 mm, sinnvoll verwendbar. Stützelemente mit einer Wandstärke von ca 1,5 mm bieten für derartige Schneideinsätze eine ausreichende Stabilität auch bei hohen Vorschubkräften.

Die bevorzugten, im wesentlichen quaderförmigen Wendeschneidplatten haben insgesamt vier Schneidkanten, nämlich am Übergang zweier entgegengesetzter Seitenflächen jeweils zur oberen und zur unteren Fläche hin. Die beiden übrigen, ebenfalls entgegengesetzt liegenden Seitenflächen des Quaders weisen die bereits erwähnten Einbuchtungen auf, die sich insgesamt über mindestens 30% der entlang der betreffenden Seitenfläche gemessenen Breite des Schneideinsatzes erstrekken, vorzugsweise aber bis zu 50% jedoch maximal 80% von der Breite des Schneideinsatzes erfassen. In eine solche, hinreichend breite Einbuchtung kann auch ein entsprechend breiteres Stützelement eingreifen, was die Stabilität der Halterung der Wendeschneidplatten verbessert. Andererseits bleibt die Schneidecke der Wendeschneidplatte stabiler, wenn die durch die Einbuchtung gebildete Hinterschneidung nicht allzu tief ist und nicht allzu nah an die Schneidecke bzw. Schneidkante heranreicht. Bei einer trapezförmigen Aussparung bei welcher die kurze Trapezseite die Breite der Stützfläche definiert, sollte diese kurze Seite im Bereich von 20% bis 60%, vorzugsweise zwischen 30 und 50 % der in derselben Richtung gemessenen Breite des Schneideinsatzes betragen, während die lange Trapezseite, welche die äußeren Ränder der Einbuchtung definiert, etwa 30% bis 80%, vorzugsweise 40% bis 70 % der Breite der Wendeschneidplatte betragen kann. Konkret haben sich Platten mit trapezförmigen Einbuchtungen als gut geeignet erweisen, bei welchen die kurze Trapezseite im Bereich von 45% +/- 5% der Breite B lag, während die lange Trapezseite etwa 60% +/- 5% der Breite B der Wendeschneidplatte ausmachte und der Flankenwinkel der Trapezseitenflächen etwa 60° +/- 5° betrug. Daraus ergeben sich gleichzeitig vernünftige Werte für die Tiefe der Einbuchtung im Verhältnis zur Breite der Wendeschneidplatte. Die Übergänge der Trapezecken können dabei mehr oder weniger stark gerundet sein.

Wie bereits erwähnt, ist die bevorzugte Quaderform der Wendeschneidplatte insofern modifiziert, als zum einen die erwähnten Einbuchtungen auf entgegengesetzten Seiten des Quaders vorgesehen sind und sie kann weiterhin auch dadurch modifiziert sein, daß auch die verbleibenden Seitenflächen, welche mit den oberen und unteren Flächen Schneidkanten bilden, vor- und zurückspringende Bereiche haben, so daß in der Draufsicht von oben oder unten das erwähnte, gezahnte Schneidkantenprofil entsteht. Eine weitere Modifikation der Quaderform liegt in den Spanmulden, die unmittelbar an die Schneidkanten angrenzend in die oberen und unteren Flächen eingeformt sind.

Zweckmäßigerweise wird die Höhe bzw. Dicke des Schneideinsatzes durch den Abstand der ebenen Abschnitte der oberen und unteren Flächen definiert, während die Dicke im Bereich der Spanmulden und bis hin zu den Schneidkanten etwas reduziert ist. Dies dient dazu, die Schneidkanten beim Auflegen bzw. Abstützen der Wendeschneidplatte auf einer entsprechenden Stützfläche eines Wendeplattenhalters zu schonen.

Zur Schonung der Schneidkanten bzw. der Zähne insgesamt sind im Falle eines gezahnten Profils die einzelnen Zähne im Querschnitt im wesentlichen trapezförmig ausgebildet, was dazu führt, daß die am weitesten vorspringenden Teile der eines Zahns jeweils eine der kurzen Trapezseite (multipliziert mit der Zahnhöhe) entsprechende Anlagefläche definieren. Zweckmäßigerweise liegen diese vorderen Trapezabschnitte bzw. vorspringenden Bereiche der Seitenflächen alle in einer gemeinsamen Ebene, so daß die ebenen Frontflächen der betreffenden Zähne gemeinsam eine Abstützfläche bilden, mit welcher der Schneideinsatz an einer weiteren Stützfläche eines Wendeplattenhalters abgestützt werden kann, die im allgemeinen senkrecht zu der Stützfläche für die jeweils untere Fläche der Wendeschneidplatte verläuft.

Wie bereits erwähnt, betrifft die Erfindung weiterhin einen Wendeplattenhalter (genauer: Wendeschneidplattenhalter bzw. Schneideinsatzhalter), der sich durch die Merkmale des Anspruchs 15 auszeichnet, wobei er neben einer ersten Stützfläche für die untere Fläche eine entsprechenden Schneideinsatzes zwei zusätzliche Stützelemente aufweist, die sich auf entgegengesetzten Seiten der Stützfläche im wesentlichen senkrecht von dieser erstrecken, auf ihren einander zugewandten Seiten weitere Stützflächen für eine dazwischen aufzunehmende Wendeplatte definieren und in Richtung ihres Abstandes bzw. in Richtung senkrecht zu ihrer Stützfläche gemessen, jeweils eine Dicke von weniger als 2 mm, vorzugsweise weniger als 1,8 mm und insbesondere weniger als 1,5 mm haben.

Eine vierte Stützfläche erstreckt sich senkrecht zu der ersten und den beiden weiteren, durch die erwähnten Stützelemente bereitgestellten Seitenflächen.

Weiterhin weist die vierte Stützfläche am Übergang zur ersten Stützfläche und auch entlang ihrer von der ersten Stützfläche abgewandten Seite einen Freistich auf, welcher zur Aufnahme bzw. Schonung von Schneidkanten dient, deren zugehörige Freiflächen an der vierten Stützfläche anliegen.

Gemäß Patentanspruch 8 betrifft die vorliegende Erfindung auch eine Kombination aus einer Wendeschneidplatte gemäß Anspruch 1 und einem Wendeplattenhalter. Der Wendeplattenhalter hat dabei eine erste Stützfläche, welche mindestens einen Teil der jeweils unteren Fläche der Wendeplatte aufnimmt.

Erfindungsgemäß hat der betreffende Wendeplattenhalter zumindest eine weitere Stützfläche, die an einem von der ersten Stützfläche ausgehenden Stützelement vorgesehen ist, welches in der Einbuchtung der Seitenfläche eines entsprechenden Schneideinsatzes aufnehmbar ist. Das Schneidelement hat also solche Abmessungen, daß es in der betreffenden Einbuchtung aufgenommen werden kann und nicht über eine Ebene hinausragt, welche durch eine Tangentialebene gebildet wird, die die am weitesten vorstehenden Bereiche der betreffenden Seitenfläche beiderseits der Einbuchtung berührt.

Dabei sind die am weitesten vorstehenden Bereiche im allgemeinen die Schneidecken bzw. die unmittelbar daran angrenzenden Nebenschneidkanten.

Bei der erwähnten Kombination aus Wendeschneidplatte und Wendeplattenhalter sind zwei entgegengesetzt angeordnete Stützelemente von der ersten Stützfläche ausgehend vorgesehen , deren lichter Abstand in etwa der in dieser Richtung gemessenen Länge des Schneideinsatzes im Bereich der Einbuchtungen entspricht. Mit anderen Worten, im Bereich seiner Einbuchtungen paßt der erfindungsgemäße Schneideinsatz im wesentlichen spielfrei oder mit allenfalls geringem Spiel genau zwischen die beiden Stützelemente, die sich als Vorsprünge von der ersten Stützfläche aus erstrecken, welche die untere Fläche des Schneideinsatzes abstützt. Die senkrecht hierzu verlaufenden Seitenflächen werden dann im Bereich der Einbuchtungen durch die beiden Stützelemente abgestützt. Je nach der Form der Einbuchtung und der Stützelemente können diese gleichzeitig auch noch als Abstützelemente in der verbleibenden dritten Raumrichtung dienen. Hierfür wird allerdings eine separate vierte Stützfläche bevorzugt, welche die an nicht aktive Schneidkanten angrenzende Seitenfläche abstützt.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: einen erfindungsgemäßen Wendeplattenhalter,
- Figur 2: einen dazugehörigen Schneideinsatz,
- Figur 3: die an dem Schneideinsatz nach Figur 1 montierte Wendeschneidplatte nach Figur 2,
- Figur 4: eine Draufsicht in etwa senkrechtauf die obere Fläche eines montierten Schneideinsatzes,
- Figuren 5a-c: verschiedene Ansichten des Schneideinsatzes nach Figur 1,
- Figur 6: eine weitere Ausführungsform eines Wendeplattenhalters,
- Figur 7: eine zweite Ausführungsform einer Wendeplatte,
- Figur 8: die an dem Wendeplattenhalter nach Figur 6 montierte Wendeschneidplatte nach Figur 7 und
- Figur 9: eine Draufsicht im wesentlichen senkrecht auf die obere Fläche einer montierten Wendeschneidplatte der zweiten Ausführungsform.

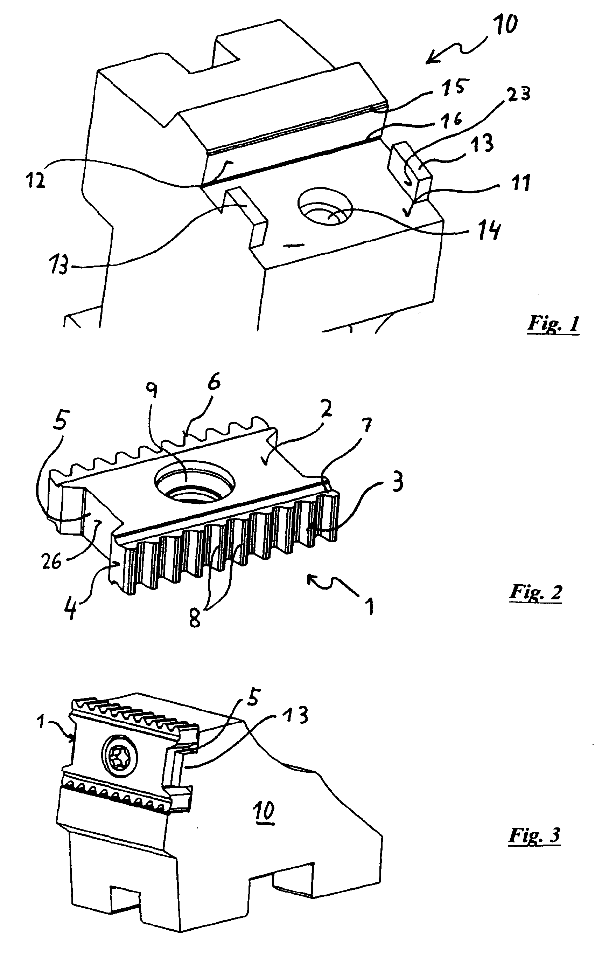

Man erkennt in Figur 1 einen Teil eines Wendeplattenhalters 10 mit einer ersten Stützfläche 11, welche eine zentrale Gewindebohrung 14 für die Aufnahme einer Spannschraube hat. An den hinteren Rand der Stützfläche 11 schließt sich senkrecht zu der Fläche 11 eine weitere Stützfläche 12 an, wobei der Übergang von der Stützfläche 11 zu der Stützfläche 12 einen Freistich 16, d.h. eine nutartige Vertiefung, aufweist, die im wesentlichen in der Stützfläche 12 bzw. an deren Rand ausgebildet ist. Einen weiteren Freistich 15 erkennt man am oberen Rand der Stützfläche 12.

Eine Besonderheit des dargestellten Wendeplattenhalters liegt jedoch in den beiden Vorsprüngen bzw. Stützelementen 13, die im wesentlichen Quaderform haben und sich senkrecht von der Stützfläche 11 erstrecken. Dabei bilden die einander zugewandten Seitenflächen 23 der Stützelemente 13 Stützflächen für einen Schneideinsatz 1, wie er in Figur 2 dargestellt ist. Die Stützflächen 23 erstrecken sich senkrecht zu der Stützfläche 11 und auch senkrecht zu der Stützfläche 12. In Figur 2 erkennt man einen Schneideinsatz, der speziell für die Verwendung in einem Wendeplattenhalter nach Figur 1 vorgesehen ist, auch wenn er in gleicher Weise auch mit anderen Wendeplattenhaltern verwendet werden könnte.

Der Schneideinsatz 1 hat die Grundform eines Quaders und kann etwas allgemeiner und gleichzeitig präziser als ein Prisma beschrieben werden, mit einer Grundfläche 2, die parallel zu einer identisch bzw. spiegelbildlich ausgebildeten unteren Fläche ist, die in den Figuren nicht sichtbar ist. Die obere Fläche 2 ist im wesentlichen eine ebene Fläche, die nur durch zwei Spanmulden 7 in der Nähe der Schneidkanten 6 modifiziert ist. Die obere Fläche 2 bzw. die entsprechend ausgebildete untere Fläche ist zur Auflage auf die Stützfläche 11 vorgesehen. Dabei ist darauf hinzuweisen, daß die Schneidkanten 6 nach oben und unten nicht über die durch die ebenen Bereiche der oberen und unteren Flächen 2 definierten Ebene hervorstehen.

Die Schneidkanten 6 sind gezahnt mit einem Trapezprofil, wobei das Trapezprofil durch entsprechende vorspringende und rückspringende Bereiche der Seitenfläche 3 des Prismas definiert werden, die durch Übergangsflächen miteinander verbunden werden, welche in der Draufsicht von oben zu der generellen Erstreckung der Frontfläche 3 des Schneideinsatzes schräg verlaufen. Die Übergänge an allen Eckbereichen der Trapeze sind, wie es durch entsprechende Linien angedeutet wird, leicht gerundet.

Die am weitesten vorstehenden Flächen der einzelnen Zähne 8 dieses Zahnprofils liegen in einer gemeinsamen Ebene und werden durch die kurzen Trapezseiten (multipliziert mit der Höhe der Zähne) des erwähnten trapezförmigen Zahnprofils gebildet. Diese ebenen Frontflächen der Zähne 8 liegen bei einem in den Wendeplattenhalter 10 montierten Schneideinsatz an der rückwärtigen Stützfläche 12 an. Die an den oberen und unteren Übergängen von der Längsseite 3 bzw. von den Zähnen zu den unteren und oberen Flächen bzw. den Spanmulden 7 definierten Schneidkanten 6 kommen dabei nicht mit der Fläche 12 in Berührung, da in den entsprechenden Bereichen die Freistiche 15, 16 vorgesehen sind. Die nicht aktiven Schneidkanten 6 werden daher gegen eine etwaige Abnutzung im Plattensitz geschützt. Die Frontflächen der Zähne und die schräg verlaufenden Übergangsflächen bilden im Gebrauch des Schneideinsatzes Freiflächen.

Auf den verbleibenden Seiten 4 der Quaderform erkennt man jeweils eine Einbuchtung 5, die in einer Draufsicht ebenfalls ein Trapezprofil hat, die aber wesentlich breiter ist als die trapezförmigen Einbuchtungen, die zwischen den Zähnen 8 definiert werden. Die Einbuchtung 5 hat beispielsweise eine Tiefe von weniger als 2,5 mm, insbesondere von etwas weniger als 1,5 mm, wobei diese Tiefe gemessen wird zwischen dem Grund der Einbuchtung 5 und der durch die außerhalb der Einbuchtung 5 durch die verbleibenden Teile der Fläche 4 definierten Ebene. Die letztgenannte Ebene wird beispielsweise definiert durch eine Tangentialebene an die am weitesten von einer Mittelebene des Schneideinsatzes hervorstehenden Teile der betreffende Seitenfläche 4.

Figur 3 zeigt den Schneideinsatz nach Figur 2 in einem an dem Wendeplattenhalter gemäß Figur 1 montierten Zustand. Der Schneideinsatz bzw. die Wendeplatte 1 wird durch eine zentrale Befestigungsschraube 25, die sich durch die zentrale Befestigungsbohrung 9 des Schneideinsatzes 1 bis in die Gewindebohrung 14 des Wendeplattenhalters erstreckt, an dem Wendeplattenhalter 10 festgehalten. Wie man erkennt, stützt sich die untere Fläche des Schneideinsatzes 1 auf der Fläche 11 ab, die Stirnseiten der Zähne 8 stützen sich auf der Fläche 12 ab und die durch den Grund der Aussparungen 5 gebildeten ebenen Stützflächen 26 stützen sich an den ebenen Flächen 23 der gegenüberliegenden Stützelemente 13 ab, wobei, wie bereits erwähnt, der Schneideinsatz und die Einbuchtungen 5 so bemessen sind, daß er im wesentlichen spielfrei oder mit wenig Spiel zwischen die beiden Stützelemente 13 paßt.

Die Stützelemente 13 werden dabei vollständig in den Einbuchtungen 5 aufgenommen, ohne über die durch die übrigen Bereiche der Seitenflächen 4 definierte Ebene hinauszustehen.

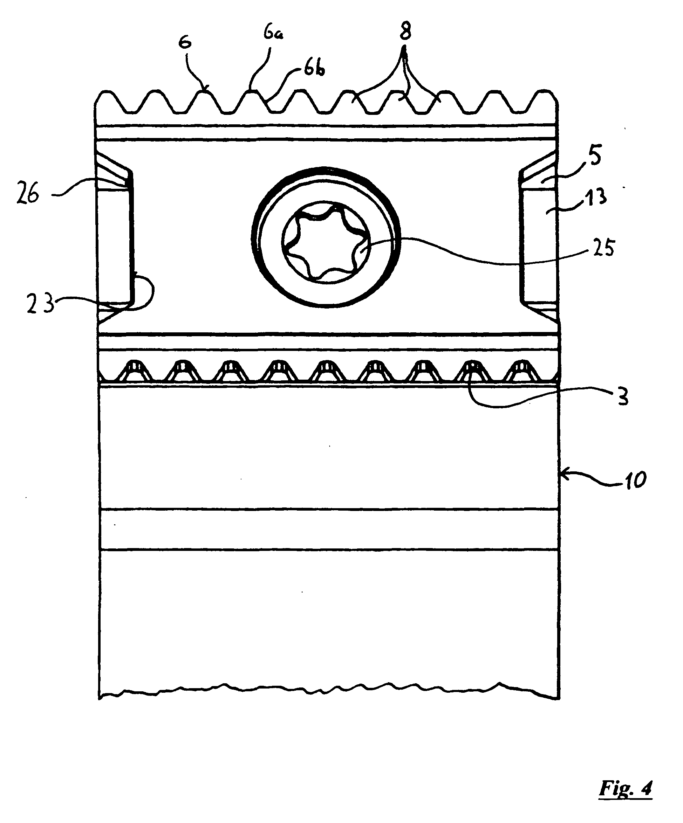

Dies wird nochmals besser erkennbar anhand der Figur 4 und der dazugehörigen Beschreibung. Figur 4 zeigt nochmals eine Draufsicht auf die obere Fläche 2 eines Schneideinsatzes 1 im montierten Zustand. Dabei ist die obere Fläche 2 gegenüber der Papierebene leicht (um einen Winkel von 8°bis 16°) in die Arbeitsposition gekippt, wie man an den an der Stützfläche 12 anliegenden Zähnen erkennen kann, deren Flanken und Grundflächen auf einer Seite des Schneideinsatzes noch zu erkennen sind. Die vorgesehene Vorschubebene entspricht dann der Papierebene, und zwar gegebenenfalls in beiden zueinander senkrechten Richtungen parallel und senkrecht zur Breite B, woraus sich ein ausreichender Freiwinkel für die Haupt- und Nebenschneidkanten der einzelnen Zähne ergibt,

Wie man sieht, liegen die beiden Stützelemente 13 im wesentlichen bündig in den Einbuchtungen 5 und ragen nicht über die äußeren Begrenzungsflächen des Schneideinsatzes hinaus, welche durch die Ebene der Seitenflächenabschnitte 4 außerhalb der Einbuchtungen 5 definiert werden.

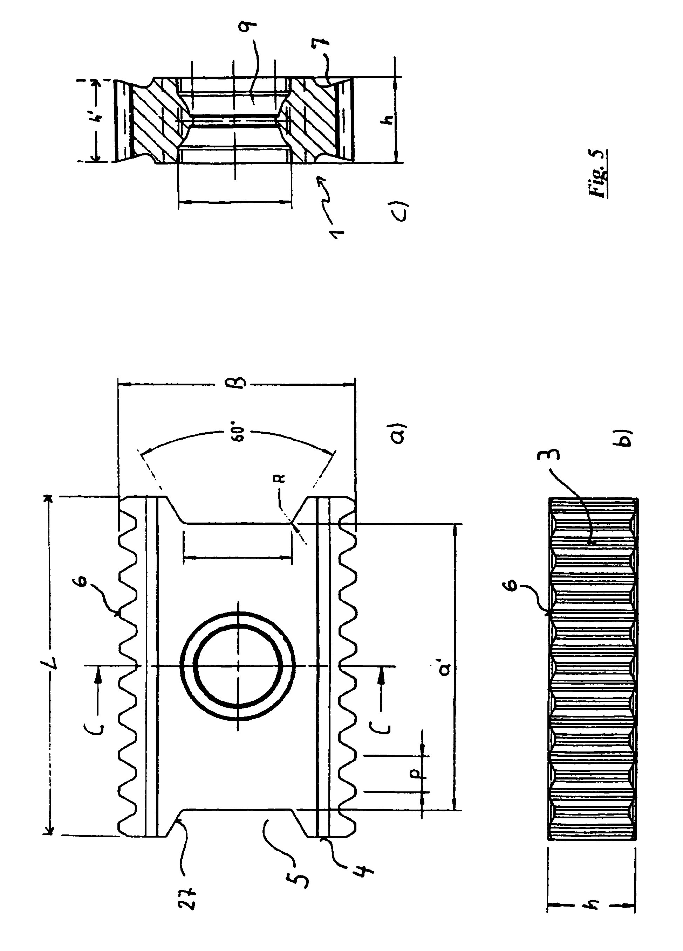

Der Schneideinsatz 1 ist in den Figuren 5a-c in entsprechenden Aufrißdarstellungen nochmals präziser dargestellt. In der Draufsicht nach Figur 5a erkennt man den Schneideinsatz 1 im wesentlichen in der gleichen Form wie in Figur 4, d.h. man sieht auf die obere Fläche 2 des Schneideinsatzes 1, erkennt an den oberen und unteren Rändern des Schneideinsatzes die gezahnte Schneidkante 6, mit trapezförmigem Zahnprofil und eine zentrale Befestigungsbohrung zur Aufnahme der Schraube 25. Die beiden Seitenflächen 4 weisen je eine Einbuchtung 5 auf, welche ebenfalls Trapezprofil hat und welche sich über etwas mehr als die Hälfte der in dieser Richtung gemessenen Breite B des Schneideinsatzes erstreckt. Der Grund 26 der Einbuchtung 5 macht dabei etwas weniger als die Hälfte der Breite B aus und bildet eine Stützfläche. Vorzugsweise ist dieser Grund 26 der Einbuchtung 5 als ebene Stützfläche 26 ausgebildet, mit welcher der Schneideinsatz an der entsprechenden ebenen Fläche 23 eines Stützelements anliegt.

Es versteht sich jedoch, daß eine solche Ausgestaltung mit ebenen Flächen keineswegs zwingend ist und daß die Ausbuchtung 5 insgesamt konkav gerundet sein könnte und die Vorsprünge ein entsprechend konvex gerundetes Profil haben könnten oder umgekehrt. Es wäre auch denkbar, die Stützelemente bzw. Vorsprünge 13 noch breiter und z. B. mit schräg oder konvex gewölbten Seitenflanken auszuführen, so daß sie mit den unter einem Winkel von 60 ° relativ zueinander verlaufenden Flanken der Einbuchtungen 5 in Eingriff treten würden, ohne notwendigerweise mit dem Grund der Einbuchtung 5 in Kontakt zu kommen. Auch dieser Flankenwinkel könnte selbstverständlich in weiten Bereichen variiert werden. Ebenso könnten anstelle der einen Einbuchtung 5 auch zwei oder mehr Einbuchtungen entlang dieser Seite vorgesehen sein und die Stützelemente 13 könnten entsprechend auch mehrfach vorgesehen sein oder ein- und dasselbe Stützelement könnte in verschiedenen Einbuchtungen angeordnet werden, um die Position der Wendeschneidplatte in dem Wendeplattenhalter zu variieren.

In der Draufsicht auf die Seitenfläche 3 gemäß Figur 5b erkennt man zum einen die ebenen Frontflächen der einzelnen Zähne 8 und die wellenförmig bzw. genauer gesagt trapezförmig verlaufenden Konturen der oberen und unteren Schneidkanten 6. Daß auch in der Draufsicht auf die Seitenfläche 3 die Schneidkanten wellenförmig bzw. zahnförmig erscheinen, hängt mit der Ausbildung der Spanmulden 7 zusammen, die im Bereich des Grundes der Zähne tiefer sind als im Frontbereich der Zähne, so daß dementsprechend die Schneidkante auch in Richtung der Höhe h des Schneideinsatzes variiert, wie man dies auch in Figur 5c erkennt.

In der Schnittansicht gemäß Figur 5c, welche der Schnittlinie C-C in Figur 5a entspricht, erkennt man, daß die Schneidkanten 6 nicht über die Ebenen der oberen und unteren Flächen 2 hinausragen, so daß aus diesem Grund die Schneidkanten 6 nicht mit der Stützfläche 11 in Kontakt kommen, wenn der Schneideinsatz in dem erwähnte Wendeplattenhalter montiert wird. Unabhängig davon könnte dem aber auch durch den Freistich 16 gemäß Figur 1 begegnet werden, wenn dieser auch die Stützfläche 11 erfassen würde.

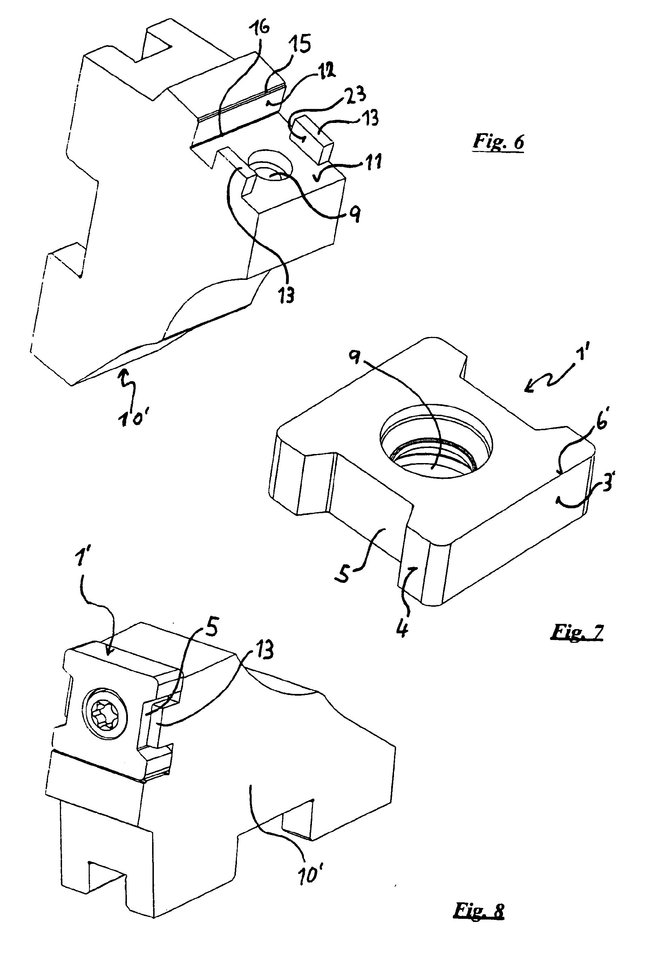

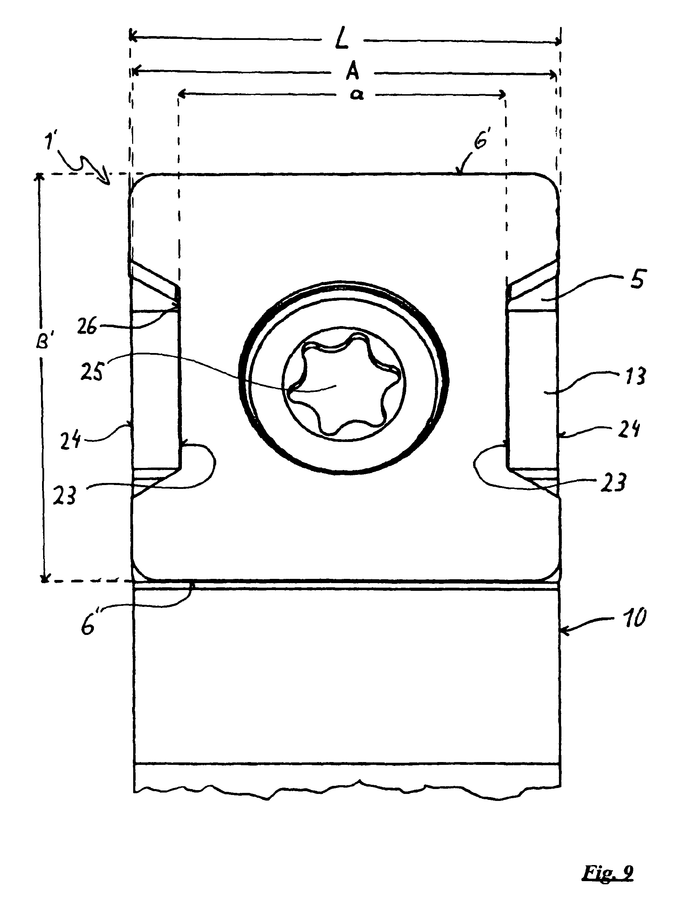

In den Figuren 6 bis 9 ist nochmals eine alternative Ausführungsform dargestellt. Dabei zeigt Figur 6 einen Wendeplattenhalter, der sich von dem in Figur 1 dargestellten Wendeplattenhalter nur durch den im Verhältnis zur Breite der Stützfläche 11 geringeren Abstand zwischen den Stützelementen 13' unterscheidet, da dieser Wendeplattenhalter für einen entsprechend kürzeren Schneideinsatz vorgesehen ist. (die Längs- und Breitenrichtung sind bezüglich des Wendeplattenhalters genauso definiert wie für den Schneideinsatz - siehe Figuren 4 und 9) Der Schneideinsatz selbst, welcher in einer perspektivischen Ansicht in Figur 7 dargestellt ist, unterscheidet sich von dem in Figur 2 dargestellten vor allem durch die gerade ausgebildeten Schneidkanten 6' anstelle des gezahnten Schneidkantenprofils 6. Außerdem sind die Schneidkanten 6' jedenfalls im Verhältnis zur Breite B' dieses Schneideinsatzes kürzer als bei der Ausführungsform nach Figur 2. Die übrigen Merkmale des Schneideinsatzes 1' der zweiten Ausführungsform sind jedoch mit denen des Schneideinsatzes 1 identisch, d.h. der Schneideinsatz 1' weist praktisch die gleichen Einbuchtungen 5 auf, die in der Draufsicht trapezförmig sind und die eine ausreichende Tiefe haben, um die Stützelemente 13' mindestens bündig aufzunehmen. Figur 8 zeigt den Schneideinsatz 1' in einem an dem Wendeplattenhalter nach Figur 6 montierten Zustand.

In Figur 9 ist der Schneideinsatz 1' nochmals vergrößert in einer Ansicht in etwa von oben auf die obere Fläche 2' dargestellt. Auch hier ist die obere Fläche 2' gegenüber der Papierebene wieder leicht gekippt (um ca 8 ° bis 16°), was man daran erkennen kann, daß die Flanken der trapezförmigen Einbuchtung 5 im oberen Bereich der Einbuchtungen 5 sichtbar sind. Auch die entsprechenden Seitenflächen der Vorsprünge 13 sind im unteren Bereich der trapezförmigen Einbuchtungen erkennbar. Die Papierebene entspricht wiederum der Vorschubebene, und zwar gegebenenfalls in beiden zueinander senkrechten Richtungen.

Anhand der Figur 9 wird nochmals deutlich, wie die relativen Abmessungen der Vorsprünge 13 und der Einbuchtungen 5 gewählt sind. Der lichte Abstand a zwischen den Vorsprüngen 13 entspricht im wesentlichen dem Abstand zwischen dem Grund 26 der Einbuchtungen 5 bzw. der in diesem Bereich gemessenen Länge des Schneideinsatzes 1'. Die Gesamtlänge des Schneideinsatzes wird definiert durch die Länge L der Schneidkante 6' bis über die Schneidecken und gegebenenfalls die sich unmittelbar anschließenden Nebenschneidkanten, während der Außenabstand der Vorsprünge 13, d.h. der Abstand zwischen den voneinander fortweisenden Flächen 24 mit A bezeichnet ist und etwas geringer ist als die Länge L des Schneideinsatzes.

Die Schneideinsätze sind vorzugsweise symmetrisch bezüglich mindestens einer oder zwei der Mittelebenen des Schneideinsatzes, wobei eine solche Mittelebene entweder senkrecht zur Achse der Befestigungsbohrung 9 verläuft oder diese Achse enthält und in letzterem Fall entweder zu parallel oder senkrecht zu der Frontfläche 3 bzw. umgekehrt bezüglich der Seitenfläche 4 verlaufen kann. Die dargestellten Schneideinsätze 1, 1' sind bezüglich aller drei Mittelebenen spiegelsymmetrisch ausgebildet.

Es versteht sich, daß gegenüber den vorstehend beschriebenen Ausführungsformen der Erfindung ohne weiteres Modifikationen in Rahmen des beanspruchten Schutzumfangs vorgenommen werden können, die vom Grundgedanken der Erfindung Gebrauch machen. Der wesentliche Grundgedanke der vorliegenden Erfindung besteht darin, daß mindestens eine der Seitenflächen eines Schneideinsatzes eine Einbuchtung aufweist, die so bemessen ist, daß ein Stützelement vollständig bündig, d.h. ohne Überstand, darin aufgenommen werden kann. Die betreffende, eine Einbuchtung aufweisende Seitenfläche verläuft mindestens geneigt und vorzugsweise senkrecht zu einer jeweils aktiven Schneidkante, muß aber nicht notwendigerweise senkrecht zu dieser verlaufen. Beispielsweise könnten entsprechende Einbuchtungen auch an ein oder zwei Seiten von in der Draufsicht fünfeckigen oder sechseckigen Schneideinsätzen vorgesehen werden. Auch im Falle mehrerer Einbuchtungen müssen diese Einbuchtungen nicht notwendigerweise genau diametral gegenüberliegen, sondern könnten beispielsweise an zwei voneinander beabstandeten Seiten eines Fünfecks angeordnet sein und dementsprechend einen Winkel von z.B. 30° bis 40° miteinander einschließen. Desgleichen müssen auch die Schneidkanten weder exakt gerade noch senkrecht zu der Abstützrichtung der Einbuchtungen verlaufen. Die Schneidkanten könnten auch bezüglich der Vorschubrichtung abgewinkelt, dachförmig gebrochen oder konvex oder konkav gekrümmt sein, wenn dies beispielsweise einem gewünschten Nutprofil entspricht.

Unter Umständen kann es auch ausreichen, wenn nur auf einer Seite ein Stützelement 13 vorgesehen ist, um zumindest in einer Richtung größere Kräfte aufzufangen, während die entgegengesetzte Richtung des Schneideinsatzes entweder nicht auftritt oder aber mit anderen Schneidparametem erfolgt, die eine Abstützung in der entgegengesetzten Richtung nicht erforderlich machen bzw. die Abstützung durch die zentrale Befestigungsschraube 25 als ausreichend erscheinen lassen.

## Patentansprüche

1. Doppelseitige Wendeschneidplatte mit einer oberen und einer unteren Fläche (2) und mit umlaufenden Seitenflächen (3, 4), welche die untere und die obere Fläche (2) miteinander verbinden und welche zu einer gemeinsamen Geraden parallel verlaufen, die wiederum im wesentliche senkrecht zu den oberen und unteren Flächen (2) verläuft, so dass sich im wesentlichen die Grundform eines Prismas ergibt, wobei entlang eines Teiles der Schnittlinien der umlaufenden Flächen (3) mit den oberen und unteren Flächen Schneidkanten (6, 6') ausgebildet sind, während an einem anderen Teil der Schnittlinien von Seitenflächen (4) mit den oberen bzw. unteren Flächen (2) keine Scheidkanten ausgebildet sind, wobei in der Draufsicht auf die obere oder untere Fläche (2) mindestens ein Teil der umlaufenden Seitenflächen (4) jeweils mindestens je eine konkave Einbuchtung (5) aufweist, die für die Aufnahme eines Abstützelementes (13) ausgelegt ist, **dadurch gekennzeichnet, dass** die Wendeschneidplatte in einer Draufsicht von oben oder unten eine rechteckige Grundform hat, wobei am Übergang zweier entgegengesetzt liegender Seitenflächen (3) zu den oberen und unteren Flächen Schneidkanten (6, 6') ausgebildet sind, während die verbleibenden zwei entgegengesetzt liegenden Seitenflächen (4) die Einbuchtungen (5) aufweisen.

2. Wendeschneidplatte nach Anspruch 1, **dadurch gekennzeichnet, dass** die Einbuchtung (5) in der Draufsicht auf die obere oder untere Seite trapezförmig erscheint.

3. Wendeschneidplatte nach Anspruch 1 oder 2, **dadurch gekennzeichnet, dass** die Einbuchtung eine Stützfläche aufweist, die mindestens 20% und maximal 80% der Breite (B) der Wendeschneidplatte beträgt und vorzugsweise zwischen 30 und 60% der Breite (B) liegt.

4. Wendeschneidplatte nach einem der Ansprüche 1 bis 3, **dadurch gekennzeichnet, dass** mehrere Einbuchtungen (5) in einer Seitenfläche (4) vorgesehen sind.

5. Wendeschneidplatte nach einem der Ansprüche 1 bis 4, **dadurch gekennzeichnet, dass** die Schneidkanten (6) in der Draufsicht auf die obere oder untere Seite (2) ein gezahntes Profil haben.

6. Wendeschneidplatte nach Anspruch 5, **dadurch gekennzeichnet, dass** die Zähne (8) des Zahnprofils einen trapezförmigen Querschnitt haben.

7. Wendeschneidplatte nach einem der Ansprüche 1 bis 6, **dadurch gekennzeichnet, dass** die Einbuchtungen (5) eine Tiefe von mindestens 1mm haben, gemessen von einer ebenen Tangentenfläche an die beiderseits außerhalb der Einbuchtung(en) gelegenen Bereiche Seitenfläche.

8. Kombination aus einer Wendeschneidplatte nach einem der Ansprüche 1 bis 7 und einem Wendeplattenhalter, wobei der Wendplattenhalter eine erste Stützfläche (11) hat, welche mindestens einen Teil der unteren Fläche (2) der Wendeschneidplatte aufnimmt, **dadurch gekennzeichnet, dass** der Wendeplattenhalter (10) mindestens ein sich im wesentlichen von der Ebene der ersten Stützfläche weg erstreckendes Stützelement (13) aufweist, welches eine Fläche (23) zur Anlage an den Grund (26) einer Einbuchtung (5) der Wendeschneidplatte (1,1') aufweist und derartige Abmessungen hat, dass es in einer Betrachtung senkrecht auf die obere Fläche (2) nicht über das Profil der oberen Fläche (2) hinausragt.

9. Kombination nach Anspruch 8, **dadurch gekennzeichnet, dass** das Stützelement (13) nicht über eine Tangentialebene an die außerhalb der Einbuchtung (5) liegenden Abschnitte der betreffenden Seitenfläche (4) hinausragt.

10. Kombination aus einer Wendeschneidplatte und einem Wendeplattenhalter nach Anspruch 8 oder 9, **dadurch gekennzeichnet, dass** das Stützelement der Form der Einbuchtung mindestens teilweise angepasst ist.

11. Kombination aus einer Wendeschneidplatte und einem Wendeplattenhalter nach einem der Ansprüche 8 bis 10, **dadurch gekennzeichnet, dass** das Stützelement (13) und die Wendeschneidplatte (1, 1') einander gegenüberliegende, ebene Anlageflächen 23, 26) aufweisen.

12. Kombination aus einer Wendeschneidplatte und einem Wendeplattenhalter nach einem der Ansprüche 8 bis 11 , **dadurch gekennzeichnet, dass** das Stützelement die Form eines flachen Quaders hat, dessen eine größte Seitenfläche (23) eine Anlagefläche für die Wendeschneidplatte (1, 1') bildet.

13. Kombination aus einer Wendeschneidplatte und einem Wendeplattenhalter nach einem der Ansprüche 8 bis 12, **dadurch gekennzeichnet, dass** im Abstand zueinander zwei Stützelemente auf gegenüberliegenden Seiten der Wendeplatte vorgesehen sind.

14. Kombination aus einer Wendeschneidplatte und einem Wendeplattenhalter nach Anspruch 12, **dadurch gekennzeichnet, dass** der lichte Abstand zwischen den Stützelementen dem Abstand der Grundflächen gegenübediegender Einbuchtungen der Wendeschneidplatte entspricht und dass der Außenabstand (A) der Stützelemente kleiner ist als die Länge (L) einer aktiven Schneidkante der Wendeplatte (1, 1').

15. Wendeplattenhalter mit einer ersten Stützfläche (11) für die Abstützung einer auf dem Wendeplattenhalter zu montierenden Wendeschneidplatte (1,1') wobei sich von entgegengesetzt liegenden Abschnitten der Stützfläche zwei Stützelemente (18) im wesentlichen senkrecht zu der ersten Stützfläche erstrecken, welche je eine weitere, zu der ersten Stützfläche (11) senkrechte zweite und dritte Stützfläche (23) definieren, die einander zugewandt sind, wobei der Wendeplattenhalter (10) eine weitere Stützfläche (12) aufweist, die sich zu der ersten (11) und zu den zweiten und dritten Stützflächen (23) unter einem Winkel zwischen 75° und 105° und vorzugsweise unter etwa 90° zu diesen erstreckt, **dadurch gekennzeichnet, dass** die Stützelemente eine senkrecht zu ihrer Stützfläche (23) gemessene Dicke (d) haben, die weniger als 2, vorzugsweise weniger als 1,5 mm beträgt und wobei die weitere Stützfläche (12) im Übergang zu der ersten Stützflächen und am oberen Rand nutartige Vertiefungen (15,16) aufweist.

16. Wendeplattenhalter nach Anspruch 15, **dadurch gekennzeichnet, daß** die Stützelemente (13) die Form von sich senkrecht zur ersten Stützfläche erstreckenden Prismen und insbesondere eine Quaderform haben.

17. Wendeplattenhalter nach einem der Ansprüche 15 bis 16, **dadurch gekennzeichnet, daß** mindestens seine mit Wendescheidplatten (1, 1') in Kontakt tretenden Elemente oder Flächen (13; 11, 12, 23) bezüglich einer sich zwischen den Stützelementen (13) erstreckenden Mittelebene symmetrisch ausgebildet sind.

## Claims

1. A double-sided indexable cutting bit having an upper and a lower face (2) and peripherally extending side faces (3, 4) which interconnect the lower and upper faces (2) and which extend parallel to a common straight line which in turn extends substantially perpendicularly to the upper and lower faces (2) so that essentially the basic shape of a prism is afforded, wherein cutting edges (6, 6') are provided along a part of the intersection lines of the peripherally extending faces (3) with the upper and lower faces, while no cutting edges are provided at another part of the intersection lines of side faces (4) with the upper and lower faces (2) respectively, wherein in plan view on to the upper or lower face (2) at least a part of the peripherally extending side faces (4) respectively has at least one respective concave recess (5) which is adapted to receive a support element (13), **characterised in that** in plan view from above or below the indexable cutting bit is of a rectangular basic shape, wherein provided at the transition of two oppositely disposed side faces (3) to the upper and lower faces are cutting edges (6, 6') while the remaining two oppositely disposed faces (4) have the recesses (5)

2. An indexable cutting bit according to claim 1 **characterised in that** the recess (5) appears trapezoidal in plan view on to the upper or lower side.

3. An indexable cutting bit according to claim 1 or claim 2 **characterised in that** the recess has a support face which is at least 20% and at a maximum 80% of the width (B) of the indexable cutting bit and is preferably between 30 and 60% of the width (B).

4. An indexable cutting bit according to one of claims 1 to 3 **characterised in that** there are provided a plurality of recesses (5) in a side face (4).

5. An indexable cutting bit according to one of claims 1 to 4 **characterised in that** in plan view on to the upper or lower side (2) the cutting edges (6) have a toothed profile.

6. An indexable cutting bit according to claim 5 **characterised in that** the teeth (8) of the tooth profile are of a trapezoidal cross-section.

7. An indexable cutting bit according to one of claims 1 to 6 **characterised in that** the recesses (5) are of a depth of at least 1 mm, measured from a flat tangential face to the regions of the side face, which are disposed on both sides outside the recess or recesses.

8. A combination comprising an indexable cutting bit according to one of claims 1 to 7 and an indexable bit holder, wherein the indexable bit holder has a first support face (11) which receives at least a part of the lower face (2) of the indexable cutting bit, **characterised in that** the indexable bit holder (10) has at least one support element (13) which extends substantially away from the plane of the first support face and which has a face (23) for bearing against the bottom (26) of a recess (5) in the indexable cutting bit (1, 1') and is of such dimensions that when viewed perpendicularly on to the upper face (2) it does not project beyond the profile of the upper face (2).

9. A combination according to claim 8 **characterised in that** the support element (3) does not project beyond a tangential plane to the portions of the side face (4) in question, which portions are disposed outside the recess (5).

10. A combination comprising an indexable cutting bit and an indexable bit holder according to claim 8 or claim 9 **characterised in that** the support element is at least partially adapted to the shape of the recess.

11. A combination comprising an indexable cutting bit and an indexable bit holder according to one of claims 8 to 10 **characterised in that** the support element (13) and the indexable cutting bit (1, 1') have mutually opposite flat contact faces (23, 26).

12. A combination comprising an indexable cutting bit and an indexable bit holder according to one of claims 8 to 11 **characterised in that** the support element is in the shape of a flat parallelepiped of which a largest side face (23) forms a contact face for the indexable cutting bit (1, 1 ').

13. A combination comprising an indexable cutting bit and an indexable bit holder according to one of claims 8 to 12 **characterised in that** there are provided two support elements at a mutual spacing on opposite sides of the indexable bit.

14. A combination comprising an indexable cutting bit and an indexable bit holder according to claim 12 **characterised in that** the internal spacing between the support elements corresponds to the spacing of the bottom faces of mutually opposite recesses in the indexable cutting bit and that the external spacing (A) of the support elements is less than the length (L) of an active cutting edge of the indexable bit (1, 1 ').

15. An indexable bit holder having a first support face (11) for supporting an indexable cutting bit (1, 1') to be mounted on the indexable bit holder, wherein two support elements (13) extend from oppositely disposed portions of the support face in substantially perpendicular relationship to the first support face (11), which support elements respectively define second and third support faces (23) which are perpendicular to the first support face and which face towards each other, said indexable cutting bit (10) having a further support face (12) which extends relative to the first (11) and to the second and third support faces (23) at an angle of between 75 and 105° and preferably at about 90° relative thereto, **characterised in that** the support elements are of a thickness (d) as measured perpendicularly to their support face (23), which is less than 2, preferably less than 1.5 mm and wherein said further support face (12) comprises groove like recesses (15,16) at its transition towards the first support faces and at the upper edge thereof .

16. An indexable bit holder according to claim 15 **characterised in that** the support elements (13) are in the form of prisms extending perpendicularly to the first support face and in particular are of a parallelepipedic shape.

17. An indexable bit holder according to one of claims 15 to 16 **characterised in that** at least its elements or faces (13; 11, 12, 23) which come into contact with indexable cutting bits (1, 1') are of a symmetrical configuration with respect to a central plane extending between the support elements (13).

## Revendications

1. Plaque de coupe amovible à deux côtés présentant une surface supérieure et une surface inférieure (2) et des surfaces latérales périphériques (3, 4) reliant les surfaces supérieure et inférieure (2) et s'étendant parallèlement à une droite commune s'étendant à nouveau perpendiculairement aux surfaces supérieure et inférieure (2), de manière à obtenir sensiblement la forme de base d'un prisme, des arêtes de coupe (6, 6') étant formées le long d'une partie des intersections des surfaces périphériques (3) et des surfaces supérieure et inférieure, tandis qu'aucune arête de coupe n'est formée sur une autre partie des intersections des surfaces latérales (3) et des surfaces supérieure et inférieure (2), au moins une partie des surfaces latérales périphériques (4) dans la vue en élévation de la surface (2) supérieure ou inférieure comprenant respectivement au moins une cavité concave (5) conçue pour recevoir un élément d'appui (13), **caractérisée en ce que** la plaque de coupe amovible présente dans une vue en élévation du dessus ou du dessous une forme de base rectangulaire, des arêtes de coupe (6, 6') étant formées sur la transition de deux surfaces latérales (3) opposées et des surfaces supérieure et inférieure, tandis que les deux surfaces latérales (4) opposées restantes présentent les cavités (5).

2. Plaque de coupe amovible selon la revendication 1, **caractérisée en ce que** la cavité (5) semble trapézoïdale dans la vue en élévation du côté supérieur ou inférieur.

3. Plaque de coupe amovible selon la revendication 1 ou 2, **caractérisée en ce que** la cavité présente une surface d'appui atteignant au minimum 20 % et au maximum 80 % de la largeur (B) de la plaque de coupe amovible et de préférence entre 30 et 60 % de la largeur (B).

4. Plaque de coupe amovible selon l'une quelconque des revendications 1 à 3, **caractérisée en ce que** plusieurs cavités (5) sont pratiquées dans une surface latérale (4).

5. Plaque de coupe amovible selon l'une quelconque des revendications 1 à 4, **caractérisée en ce que** les arêtes de coupe (6) présentent dans la vue en élévation du côté supérieur ou inférieur (2) un profil denté.

6. Plaque de coupe amovible selon la revendication 5, **caractérisée en ce que** les dents (8) du profil denté présentent une section transversale trapézoïdale.

7. Plaque de coupe amovible selon l'une quelconque des revendications 1 à 6, **caractérisée en ce que** les cavités (5) présentent une profondeur d'au moins 1 mm, mesurée depuis une surface tangentielle plane sur les zones de la surface latérale disposées de part et d'autre à l'extérieur de la ou des cavités.

8. Combinaison d'une plaque de coupe amovible selon l'une quelconque des revendications 1 à 7 et d'un support de plaque amovible, le support de plaque amovible présentant une première surface d'appui (11) recevant au moins une partie de la surface inférieure (2) de la plaque de coupe amovible, **caractérisée en ce que** le support de plaque amovible (10) comprend au moins un élément d'appui (13) s'étendant sensiblement à distance du plan de la première surface d'appui et comprenant une surface (23) destinée à être en appui contre le fond (26) d'une cavité (5) de la plaque de coupe amovible (1, 1') et présentant des dimensions telles que, suivant une observation perpendiculaire à la surface supérieure (2), il ne fait pas saillie du profil de la surface supérieure (2).

9. Combinaison selon la revendication 8, **caractérisée en ce que** l'élément d'appui (13) ne fait pas saillie d'un plan tangentiel sur les parties de la surface latérale (4) concernée situées à l'extérieur de la cavité (5).

10. Combinaison d'une plaque de coupe amovible et d'un support de plaque amovible selon la revendication 8 ou 9, **caractérisée en ce que** l'élément d'appui est adapté au moins en partie à la forme de la cavité.

11. Combinaison d'une plaque de coupe amovible et d'un support de plaque amovible selon l'une quelconque des revendications 8 à 10, **caractérisée en ce que** l'élément d'appui (13) et la plaque de coupe amovible (1, 1') présentent des surfaces de butée (23, 26) planes opposées les unes aux autres.

12. Combinaison d'une plaque de coupe amovible et d'un support de plaque amovible selon l'une quelconque des revendications 8 à 11, **caractérisée en ce que** l'élément d'appui présente la forme d'un carré plat dont une plus grande surface latérale (23) forme une surface de butée pour la plaque de coupe amovible (1, 1').

13. Combinaison d'une plaque de coupe amovible et d'un support de plaque amovible selon l'une quelconque des revendications 8 à 12, **caractérisée en ce que** deux éléments d'appui sont disposés à distance l'un de l'autre sur des côtés opposés de la plaque amovible.

14. Combinaison d'une plaque de coupe amovible et d'un support de plaque amovible selon la revendication 12, **caractérisée en ce que** l'écart intérieur entre les éléments d'appui correspond à l'écart des surfaces de base des cavités opposées de la plaque de coupe amovible et **en ce que** l'écart extérieur (A) des éléments d'appui est inférieur à la longueur (L) d'une arête de coupe active de la plaque amovible (1, 1').

15. Support de plaque amovible doté d'une première surface d'appui (11) pour l'appui d'une plaque de coupe amovible (1, 1') destinée à être montée sur le support de plaque amovible, deux éléments d'appui (18) s'étendant à partir de parties opposées de la surface d'appui, sensiblement perpendiculairement à la première surface d'appui et définissant respectivement une deuxième et une troisième surface d'appui (23) se faisant face et perpendiculaires à la première surface d'appui (11), le support de plaque amovible (10) comprenant une autre surface d'appui (12) s'étendant selon un angle compris entre 75° et 105° et de préférence d'environ 90° par rapport à la première (11) et à la deuxième et à la troisième surface d'appui (23), **caractérisé en ce que** les éléments d'appui présentent une épaisseur (d) mesurée perpendiculairement à leur surface d'appui (23) inférieure à 2, de préférence inférieure à 1,5 mm et l'autre surface d'appui (12) présentant des creux de type rainure (15, 16) dans la transition menant aux premières surfaces d'appui et sur le bord supérieur.

16. Support de plaque amovible selon la revendication 15, **caractérisé en ce que** les éléments d'appui (13) présentent une forme de prismes s'étendant perpendiculairement à la première surface d'appui et en particulier une forme carrée.

17. Support de plaque amovible selon l'une quelconque des revendications 15 à 16, **caractérisé en ce qu'**au moins ses éléments entrant en contact avec les plaques de coupe amovibles (1, 1') ou ses surfaces (13 ; 11, 12, 23) sont symétriques à un plan médian s'étendant entre les éléments d'appui (13).
